# EUROPÄISCHE PATENTSCHRIFT

(11) **EP 0 884 226 B1**
(45) Veröffentlichungstag und Bekanntmachung des Hinweises auf die Patenterteilung: **24.07.2002**
(21) Anmeldenummer: 98109754.6
(22) Anmeldetag: 28.05.1998
(51) Int. Cl.: B60R 22/46

(54) **Gurtstraffer für ein Insassen-Rückhaltesystem**
Pretensioner for a passenger restraint system
Prétendeur pour système de retenue de passager

(30) Priorität: 12.06.1997 DE 29710325 U
(43) Veröffentlichungstag der Anmeldung: 16.12.1998
(73) Patentinhaber: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Sulzbach, Werner, Dipl.-Chem. Dr.

(56) Entgegenhaltungen:
- DE-A- 2 726 096
- DE-A- 3 044 951
- FR-A- 2 169 381
- FR-A- 2 286 730
- US-A- 4 232 886

## Beschreibung

Die Erfindung betrifft einen Gurtstraffer in einem Insassen-Rückhaltesystem, das einen Sicherheitsgurt aufweist, wovon ein Ende des Gurtbandes am Fahrzeugaufbau verankert ist.

Derartige Gurtstraffer enthalten gewöhnlich einen Kolben/Zylinder-Linearantrieb, der eine pyrotechnische Treibladung aufweist. Eine der bekannten Bauformen von Gurtstraffern (DE 30 44 951 A1) greift unmittelbar am Gurtband an, um eine Gurtbandschlaufe zu bilden, durch welche die wirksame Gurtbandlänge reduziert wird. Die Gurtbandschlaufe wird zwischen zwei fahrzeugfesten Umlenkelementen gebildet.

In der DE 27 26 096 A1 wird eine gattungsgemäße Spannvorrichtung für Sicherheitsgurte beschrieben, mit einem in einem feststehenden Zylinder verschiebbaren Kolben, der zur Verschiebung in eine Spannstellung mit einem von einem Sensor auslösbaren Treibmittel beaufschlagbar ist und dabei über eine Kolbenstange an dem Sicherheitsgurt angreift. Im Auslösefall wird das Gurtband von der Kolbenstange unter Bildung einer Schlaufe zwischen zwei Umlenkstellen mitgenommen.

Bei dieser Ausführungsform wirkt sich nachteilig aus, dass ein relativ langer Kolbenhub erforderlich ist, um das Gurtband um eine bestimmte Länge einzuziehen, so dass die Straffzeit lang ist.

Aufgabe der Erfindung ist die Bereitstellung eines Gurtstraffers der eingangs genannten Art, der sich bei großer Gurtband-Einzugslänge durch eine sehr kompakte Bauform, durch eine hohe Arbeitsgeschwindigkeit und durch eine einfache Konstruktion auszeichnet.

Die Aufgabe wird gelöst durch die Merkmale des Patentanspruchs 1.

Der erfindungsgemäße Gurtstraffer enthält einen Kolben/Zylinder-Linearantrieb mit einer pyrotechnischen Treibladung. Der Kolben/Zylinder-Linearantrieb enthält einen Zylinder mit zwei darin einander gegenüberliegend angeordneten Kolben, zwischen denen eine Druckkammer gebildet ist. Jeder Kolben ist an seiner äußeren Stirnfläche mit einem Angriffselement versehen, und beide Angriffselemente werden vom Gurtband zwischen einem fahrzeugfesten Umlenkelement und dem am Fahrzeugbau verankerten Ende des Gurtbandes umschlungen. Das Gurtband bildet somit neben seiner Endbefestigung am Fahrzeugbau eine Schlaufe entsprechend der Form der Angriffselemente an den Stirnflächen der Kolben. Bei Aktivierung des Gurtstraffers werden die Kolben durch die gezündete Treibladung aus dem Zylinder herausgestoßen, wobei sich die Gurtbandschlaufe vergrößert. Die Vergrößerung der Gurtbandschlaufe hat einen Gurtbandeinzug zur Folge, wobei die Länge des Gurtbandeinzuges gleich dem doppelten Wert der Summe beider Kolbenhübe ist. Durch den symmetrischen Aufbau des Kolben/Zylinder-Linearantriebs wirken die bei Aktivierung der Treibladung auftretenden Kräfte in einander entgegengesetzter Axialrichtung, so daß keine Rückstoßkräfte abgestützt werden müssen.

Um nach beendigter Gurtstraffung die eingezogene Gurtbandlänge festzuhalten, sind grundsätzlich zwei Lösungen vorgesehen: Gemäß einem ersten Lösungsvorschlag wird das Gurtband mittels einer Gurtklemme, die beispielsweise eine exzentrisch gelagerte Rolle aufweist, abgeklemmt; gemäß einem zweiten Lösungsvorschlag wird der bzw. jeder Kolben mit einer Rücklaufsperre versehen, die seine Rückbewegung im Zylinder verhindert.

Aufgrund seiner kompakten Bauweise eignet sich der erfindungsgemäße Gurtstraffer auch für den Einsatz bei beengten Raumverhältnissen, insbesondere an einem Endbeschlag an einem Rücksitz des Fahrzeugs.

Weitere Merkmale und Vorteile der Erfindung ergeben sich aus der folgenden Beschreibung zweier Ausführungsformen und aus der Zeichnung, auf die Bezug genommen wird. In der Zeichnung zeigen:
Figur 1 eine erste Ausführungsform des Gurtstraffers im axialen Schnitt durch einen Kolben/Zylinder-Linearantrieb;
Figur 2 eine teilweise geschnittene Ansicht gemäß Linie II-II in Figur 1;
Figur 3 einen axialen Schnitt einer zweiten Ausführungsform des Gurtstraffers.

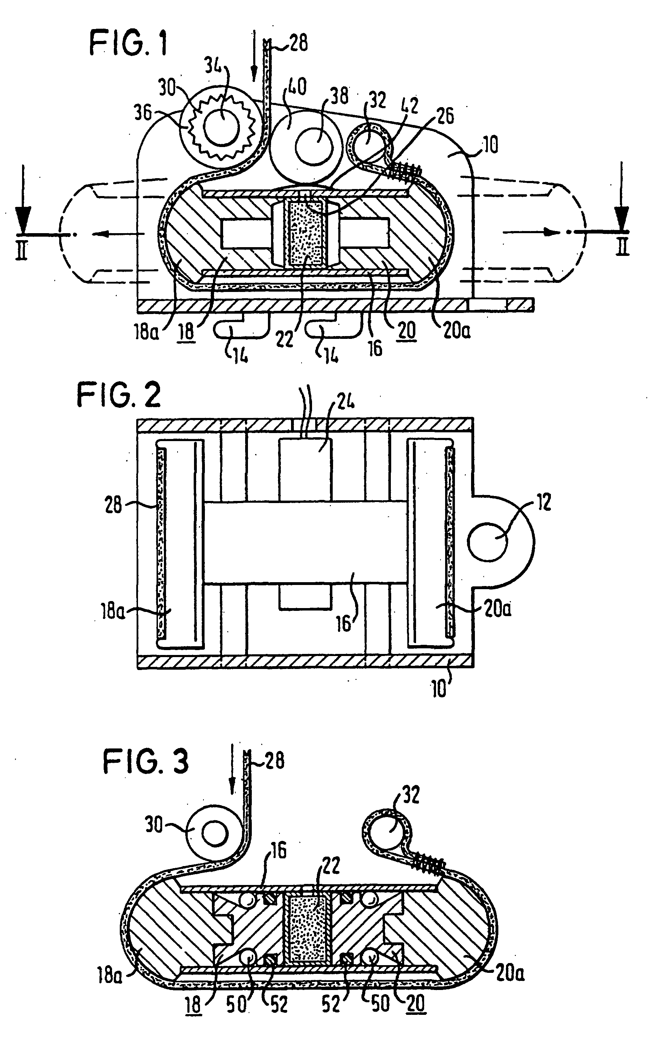

Der in den Figuren 1 und 2 gezeigte Gurtstraffer enthält als lasttragendes Bauteil einen im Querschnitt U-förmigen Rahmen 10, dessen Boden mit einer Öse 12 und mehreren aus diesem ausgestellten Haken 14 am Fahrzeugaufbau befestigt wird. Im Rahmen 10 ist ein Zylinder 16 mit seiner Achse parallel zum Boden des Rahmens befestigt. In jedes Ende des Zylinders 16 ist ein Kolben 18, 20 verschiebbar eingesetzt. Der zwischen den inneren Enden der Kolben 18, 20 im Zylinder 16 verbleibende Raum bildet einen Druckraum, in dem eine pyrotechnische Treibladung 22 angeordnet ist. Bestandteil dieses Druckraumes sind axiale Bohrungen an den inneren Enden der Kolben 18, 20. Eine außen am Zylinder 16 angebrachte Zündeinrichtung 24 steht über eine Bohrung 26 in der Zylinderwand mit dem Druckraum im Inneren des Zylinders in Verbindung.

An der Stirnfläche jedes Kolbens 18, 20 ist eine Umlenkkufe 18a bzw. 20a angeformt. Diese Umlenkkufen 18a, 20a werden mit dem gesamten Zylinder 16 von einem Gurtbandabschnitt 28 umschlungen. Dieser Gurtbandabschnitt 28 läuft über eine im Rahmen 10 drehbar gelagerte Umlenkrolle 30, dann über die Umlenkkufe 18a, an der Außenwand des Zylinders 16 entlang, dann über die Umlenkkufe 20a und schließlich zu einem zwischen den Schenkeln des Rahmens 10 gehaltenen Bolzen 32, an dem das Ende des Gurtbandabschnitts 28 mittels einer Schlaufe verankert ist. Die Umlenkrolle 30 ist auf einem Lagerbolzen 34 drehbar gelagert, der zwischen den Schenkeln des Rahmens 10 gehalten ist. Die Umlenkrolle 30 ist mit einer reibschlüssig aufgeschobenen Hülse 36 versehen.

Mit der Umlenkrolle 30 wirkt eine exzentrisch auf einem Lagerbolzen 38 drehbar gelagerte Klemmrolle 40 als Rücklaufsperre zusammen. Der Gurtbandabschnitt 28 läuft zwischen der Umlenkrolle 30 und der Klemmrolle 40 durch. Die Klemmrolle 40 wird durch eine an der Außenseite des Zylinders 16 abgestützte, gewölbte Blattfeder 42 in Anlage an das Gurtband gedrückt.

Zur Aktivierung des Gurtstraffers wird der Zünder 24 (beispielsweise elektrisch) ausgelöst, der dann durch die Öffnung 26 in der Zylinderwandung seinerseits die Treibladung 22 auslöst. Durch den nun im Druckraum zwischen den Kolben 18, 20 sich aufbauenden, extrem hohen Druck werden die Kolben 18, 20 auseinandergetrieben und gelangen in ihre in Figur 1 gestrichelt dargestellte Endstellung. Dadurch wird die um die Kolben herum gelegte Gurtbandschlaufe entsprechend vergrößert, so daß eine Gurtbandlänge eingezogen wird, die dem doppelten Wert der Summe beider Kolbenhübe oder dem vierfachen Wert eines Kolbenhubes entspricht. Man sieht, daß bei einem kleinen Kolbenhub eine große Gurtbandlänge eingezogen werden kann.

Bei diesem Vorgang wird der Gurtbandeinzug durch die Klemmrolle 40 nicht behindert, da ihr Umfang sich bei Drehung entgegengesetzt zum Uhrzeigersinn vom Gurtband entfernt. Wenn nun nach erfolgter Gurtbandstraffung die Bewegungsrichtung des Gurtbandes durch die im Gurtbandsystem auftretende Last umgekehrt wird, so dreht sich die Klemmrolle 40 im Uhrzeigersinn, wodurch ihre Klemmfunktion aktiviert wird.

Erst bei sehr hoher Last rutscht die Hülse 36 auf den Umfang der Umlenkrolle 30, wodurch eine Kraftbegrenzung mit einem vorbestimmten Kraftverlauf eintritt.

Bei der in Figur 3 schematisch gezeigten Ausführungsform des Gurtstraffers enthält der Kolben/Zylinder-Linearantrieb im Zylinder 16 zwei Kolben 18, 20, die wie bei der zuvor beschriebenen Ausführungsform mit Umlenkkufen 18a, 20a an den äußeren Stirnflächen versehen sind. Auch hier ist der Gurtbandabschnitt 28 über eine Umlenkrolle 30 geführt. Anstelle einer Klemmrolle ist jedoch ein Klemmgesperre im Zylinder 16 vorgesehen, das aus mehreren Klemmkugeln 50 in einer umlaufenden Nut am Umfang jedes Kolbens 18, 20 mit rampenförmigem Boden besteht. Ferner sind die Kolben 18, 20 mittels je einer O-Ringdichtung 52 in Zylinder 16 abgedichtet.

## Patentansprüche

1. Gurtstraffer in einem Insassen-Rückhaltesystem, das einen Sicherheitsgurt aufweist, wovon ein Ende des Gurtbandes (28) am Fahrzeugaufbau verankert ist, mit einem Kolben/Zylinder-Linearantrieb (16, 18, 20), der eine pyrotechnische Treibladung (22) aufweist, einem fahrzeugfesten Umlenkelement (30) für das Gurtband und einem dem Umlenkelement benachbart angeordneten Angriffselement, das durch den Kolben/Zylinder-Linearantrieb bewegbar ist, **dadurch gekennzeichnet, daß** der Kolben/Zylinder-Linearantrieb einen Zylinder (16) und zwei darin einander gegenüberliegend angeordnete Kolben (18, 20) aufweist, zwischen denen eine Druckkammer gebildet ist, daß jeder Kolben (18, 20) an seiner äußeren Stirnfläche ein Angriffselement (18a, 20a) trägt und daß beide Angriffselemente vom Gurtband zwischen dem Umlenkelement (30) und dem am Fahrzeugaufbau verankerten Ende des Gurtbandes umschlungen werden.

2. Gurtstraffer nach Anspruch 1, **dadurch gekennzeichnet, daß** das Gurtband zwischen dem Umlenkelement (30) und einer diesem gegenüberliegend angeordneten Klemmrolle (40) hindurchgeführt ist und die Klemmrolle (40) drehbar sowie gegen das Gurtband (28) beweglich gelagert ist.

3. Gurtstraffer nach Anspruch 2, **dadurch gekennzeichnet, daß** die Klemmrolle (40) auf einer exzentrischen Achse (38) gelagert ist.

4. Gurtstraffer nach Anspruch 2 oder 3, **dadurch gekennzeichnet, daß** die Klemmrolle (40) durch Federkraft (42) in Anlage am Gurtband (28) gehalten ist.

5. Gurtstraffer nach Anspruch 1, **dadurch gekennzeichnet, daß** die Treibladung (22) zwischen den beiden Kolben (18, 20) innerhalb des Zylinders (16) angeordnet ist.

6. Gurtstraffer nach Anspruch 5, **dadurch gekennzeichnet, daß** der Treibladung (22) gegenüberliegend in der Wandung des Zylinders (16) eine Öffnung (26) gebildet ist, durch die hindurch die Treibladung (22) mittels eines außerhalb des Zylinders (16) angeordneten Zünders (24) aktivierbar ist.

7. Gurtstraffer nach Anspruch 1, **dadurch gekennzeichnet, daß** die Kolben (18, 20) innenseitig eine axiale Bohrung aufweisen, die Bestandteil der Druckkammer ist.

8. Gurtstraffer nach Anspruch 1, **dadurch gekennzeichnet, daß** der Kolben (18) mit einer Rücklaufsperre (50) versehen ist.

## Claims

1. A belt tensioner in an occupant restraint system, having a safety belt of which one end of the belt webbing (28) is anchored to the vehicle body, with a piston/cylinder linear drive (16, 18, 20) which has a pyrotechnic propellant charge (22), with a vehicle-fixed deflector element (30) for the belt webbing, and with an engagement element which is arranged adjacent to the deflector element and is movable by the piston/cylinder linear drive, **characterized in that** the piston/cylinder linear drive has a cylinder (16) and two pistons (18, 20) arranged therein lying opposite each other, between which a pressure chamber is formed, that each piston (18, 20) carries an engagement element (18a, 20a) on its outward end face, and that both engagement elements are looped around by the belt webbing between the deflector element (30) and the end of the belt webbing which is anchored to the vehicle body.

2. The belt tensioner according to claim 1, **characterized in that** the belt webbing is guided through between the deflector element (30) and a clamping roller (40) arranged lying opposite thereto, and that the clamping roller (40) is mounted rotatably and so as to be movable towards the belt webbing (28).

3. The belt tensioner according to claim 2, **characterized in that** the clamping roller (40) is mounted on an axle (38) so as to be eccentric.

4. The belt tensioner according to claim 2 or 3, **characterized in that** the clamping roller (40) is held in contact with the belt webbing (28) by elastic force (42).

5. The belt tensioner according to claim 1, **characterized in that** the propellant charge (22) is arranged between the two pistons (18, 20) inside the cylinder (16).

6. The belt tensioner according to claim 5, **characterized in that** an opening (26) is formed in the wall of the cylinder (16) lying opposite the propellant charge (22), through which opening (26) the propellant charge (22) is able to be activated by means of an igniter (24) arranged outside the cylinder (16).

7. The belt tensioner according to claim 1, **characterized in that** the pistons (18, 20) have an axial bore on the inner side, which bore constitutes part of the pressure chamber.

8. The belt tensioner according to claim 1, **characterized in that** the piston (18) is provided with a return stop (50).

## Revendications

1. Tendeur de ceinture dans un système de retenue de passagers d'un véhicule qui présente une ceinture de sécurité dont une extrémité de la sangle (28) est ancrée sur la caisse du véhicule, comprenant un entraînement linéaire à piston/cylindre (16, 18, 20) muni d'une charge propulsive pyrotechnique (22), un élément de renvoi (30) solidaire du véhicule, pour le renvoi de la sangle de ceinture, et un élément d'attaque disposé au voisinage de l'élément de renvoi, qui peut être mû par l'entraînement linéaire à piston/cylindre, **caractérisé en ce que** l'entraînement à piston/cylindre comprend un cylindre (16) et deux pistons (18, 20) agencés dans celui-ci à l'opposé l'un de l'autre, entre lesquels est formée une chambre de pression, **en ce que** chaque piston (18, 20) porte, sur sa face frontale extérieure, un élément d'attaque (18a, 20a), et **en ce que** les deux éléments d'attaque sont entourés par la sangle de ceinture entre l'élément de renvoi (30) et l'extrémité de la sangle de ceinture qui est ancrée sur la caisse du véhicule.

2. Tendeur de ceinture selon la revendication 1, **caractérisé en ce que** la sangle de ceinture est enfilée entre l'élément de renvoi (30) et un rouleau de serrage (40) agencé en face de celui-ci, et **en ce que** le rouleau de serrage (40) est logé de façon à pouvoir tourner et à pouvoir se déplacer contre la sangle de ceinture (28).

3. Tendeur de ceinture selon la revendication 2, **caractérisé en ce que** le rouleau de serrage est monté sur un axe (38) excentré.

4. Tendeur de ceinture selon la revendication 2 ou 3, **caractérisé en ce que** le rouleau de serrage (40) est maintenu en appui sur la sangle de ceinture (28) par une force de ressort (42).

5. Tendeur de ceinture selon la revendication 1, **caractérisé en ce que** la charge propulsive (22) est disposée entre les deux pistons (18, 20) à l'intérieur du cylindre (16).

6. Tendeur de ceinture selon la revendication 5, **caractérisé en ce qu'**en face de la charge propulsive (22), une ouverture (26) est formée dans la paroi du cylindre (16), à travers laquelle la charge propulsive (22) peut être activée au moyen d'un détonateur (24) disposé à l'extrémité du cylindre (16).

7. Tendeur de ceinture selon la revendication 1, **caractérisé en ce que** les pistons (18, 20) présentent, à l'intérieur, un perçage axial qui fait partie de la chambre de pression.

8. Tendeur de ceinture selon la revendication 1, **caractérisé en ce que** le piston (18) est pourvu d'un cliquet antiretour (50).
